# EUROPEAN PATENT APPLICATION

(11) **EP 1 314 351 A1**
(43) Date of publication of application: **28.05.2003**
(21) Application number: 01963402.1
(22) Date of filing: 30.08.2001
(51) Int. Cl.: A01K 63/04, C02F 1/28, B01J 19/00

(54) **WATER FOR ASSISTING THE PURIFICATION OF WATER FOR FEEDING ORNAMENTAL FISHES OR FISHES AND SHELLFISHES**

(30) Priority: 31.08.2000 JP 2000262198
(71) Applicant: Phild Co., Ltd., Kyoto city, Kyoto 602-0023 (JP)
(72) Inventor: HIRATA, Y., c/o Phild Co., Ltd, Kawamoto Bldg 4F, Kyoto City, Kyoto 602-0023 (JP); UEDA, Y., c/o Phild Co., Ltd, Kawamoto Bldg 4F, Kyoto City, Kyoto 602-0023 (JP); TAKASE, H., c/o Phild Co., Ltd, Kawamoto Bldg 4F, Kyoto City, Kyoto 602-0023 (JP)
(74) Representative: VOSSIUS & PARTNER
(86) International application number: JP0107476
(87) International publication number: WO02017710

(57) **Abstract**

The purpose of the present invention is to provide high-function water that, when used as water for assisting the purification of water for feeding ornamental fish or edible fish and shellfish, increases the bioactivity of water containing fish and shellfish, provides an enhanced tank purification function, and extends the cleaning cycle. Fine active carbon particles are pre-dispersed in high-pressure water, and a gaseous mixture of oxygen and hydrogen is combusted in this high-pressure water to burn the active carbon using the combustion gas. The resultant dispersed active carbon solution in which ultra-fine active carbon particles are dispersed is then used as water for assisting the purification.

## Description

### Field of the Invention

This invention relates to water for assisting the purification of water for feeding ornamental fish or edible fish and shellfish, comprising a solution in which ultra-fine active carbon particles are dispersed.

Specifically, the invention relates to water for assisting the purification of water for feeding ornamental fish or edible fish and shellfish, consisting of water in which the ultra-fine active carbon particles are dispersed, such particles being obtained from combusting a gaseous mixture of oxygen and hydrogen in high-pressure water and then burning active carbon using the combustion gas.

### Background of the Invention

Active carbon is made from wood materials such as charcoal, wood chips and bark; vegetable matter such as fruit rinds, waste syrups, chaff, strained sugar cane, lees and beans; mineral matter such as brown coal and peat; and waste matter such as pulp, spent liquor and waste alcohol, which are heated to around 700°C. The carbides thus obtained are activated through reheating to between 900°C and 1000°C. The resultant active carbon powder (100 meshes or less) is used for water purification and wastewater treatment in industrial plants and breweries, while active carbon granules (5 to 30 meshes) are used for gas or water treatment. The basic purpose in the use of active carbon is to chemically or physically harness the natural function of active carbon so that it can absorb gases and liquids. In the chemical industry, for example, active carbon is among the various catalysts used to trigger chemical actions. In the food industry, the physical actions of active carbon are utilized in the production of refined sugar, starch sugar, dairy products, brewed foods and liquors, edible oils, food additives, and so on.

As explained above, the primary roles of active carbon are bleaching; deodorizing; removing white clay odor; removing colloids; trapping betaine, glutamic acid and other substances; improving crystalline properties; preparing flavoring agents; stabilizing product properties; and other purposes. At home, active carbon is mainly used for the purpose of deodorization, a representative example of which is the deodorizing of refrigerators.

Various studies have been conducted regarding the production and use of active carbon (e.g. *Kasseitan no Hanashi* (Story of Active Carbon) by Hideki Tatemoto, Nikkan Kogyo Shimbun; *Shinpan Kasseitan: Kiso to Oyo* (Active Carbon: Basics and Application-New Edition) by Yuzo Sanada et al., Kodansha; and *Kasseitan Dokuhon* (Textbook on Active Carbon) by Nobuo Ishizaki, Nikkan Kogyo Shimbun). The inventors have been studying methods of developing effective uses of active carbon.

The breeding of ornamental fish, on the other hand, has become a popular hobby in recent years. However, the owners of such fish are finding the cleaning of water and fish tanks a laborious task. The more expensive the fish are, the more sensitive they are to water quality. The common, traditional method of filtering the water in the fish tank using general-purpose active carbon does not provide satisfactory results, and the owners must devote a lot of time to frequent changes of water. Healstone has lately been used as an alternative to active carbon, but its effect also falls short of expectations. The changing of water involves a rapid change in water quality, which could have significant physiological impact on the fish. After taking such pains to change the water, the owners may find their fish become less energetic, or that sometimes they even die. One of the greatest wishes of ornamental fish owners is to prolong the intervals between cleanings of the fish tank.

Riding the recent gourmet boom, many restaurants are advertising fine dishes using live fish. Accordingly, there is strong demand for the keeping of fresh fish in natural condition for a prolonged period inside a fish tank. However, there has been no satisfactory means available for keeping fish alive for a prolonged period.

Patented technologies have been known that relate to the cleaning of fish tanks and keeping fish and shellfish alive for prolonged periods. They include the method used to decompose fish and shellfish-discharged ammonia by applying current to the water (Japanese Patent Application Laid-open No. 4-150995); the use of active carbon for better deodorization and control of water quality (Japanese Patent Application Laid-open No. 7-214051); the partial ozonization of supplied oxygen for the control of oxygen supply volume in accordance with the dissolved oxygen content in fish-tank water, thereby increasing the dissolved oxygen content for sterilization of fish-tank water and enabling fish and shellfish to be kept at higher density (Japanese Patent Application Laid-open No. 55-159739); the device that provides a mechanism and pressure-driven film for removing/separating organic and solid matter in the water-feed line to the fish tank for the effective cleaning of supply water and the elimination of germs affecting fish and shellfish, thereby promoting their healthy growth (Japanese Patent Application Laid-open No. 4-104748); the method used to remove water-borne contaminants through the generation of air bubbles by introducing air into the water and then allowing the contaminants to be absorbed into the air bubbles (Japanese Patent Application Laid-open No. 4-267984); and the device for the efficient, simultaneous filtering and ozone-sterilization of water in tanks containing fish and shellfish (Japanese Patent Application Laid-open No. 8-131019). However, as stated above, no technology has been developed that would reliably keep ornamental fish or edible fish and shellfish alive for a prolonged period in healthy condition or maintain these fish tanks and live wells in clean condition for a long period of time.

### Summary of the Invention

As explained above, in the raising/keeping of ornamental fish or edible fish and shellfish in a fish tank, installing a purification system for cleaning fish-tank water may not eliminate the contamination in the tank caused by the excrement from ornamental fish or edible fish and shellfish. When the water is opaque, very cloudy or has other visible signs of contamination, the tank walls must be cleaned, sediments removed, and water replaced. In some cases, replacement of the sand at the bottom of the tank may also be required. Tanks containing fish used for cooking are subject to more severe water contamination than tanks containing ornamental fish, although specific degrees of contamination vary depending on the size of the fish. In such cases, increasing the performance of the purification system cannot sufficiently clean the water, and sometimes fish may sustain damage to their skin due to collisions with the tank walls in cloudy water. For these reasons, in reality fish could only be kept for several days at most before they begin to lose the freshness required in live fish dishes.

The inventors had focused on the natural deodorizing and function-recovering capabilities of active carbon and studied means of developing their applications. As a result, they found that when active carbon is pre-dispersed in high-pressure water and then burned using a gaseous mixture of hydrogen and oxygen, the obtained water in which fine active carbon particles are dispersed provides higher benefits to the human body compared with the conventional active carbons. The inventors had thus filed a patent application concerning the production method for said water (Japanese Patent Application No. 2000-262129). The present invention provided hereunder was developed through further study and development regarding the use of said technology, which revealed that adding these ultra-fine active carbon particles to water in live fish tanks would sufficiently achieve the intended purposes.

In the context of the present invention, water containing micro-dispersed ultra-fine active carbon particles is called "dispersed active carbon water."

The present invention aims to utilize the benefits of active carbon in the cleaning of water tanks used for the raising/keeping of ornamental fish or edible fish and shellfish, in order to solve the inherent problems in improving the bioactivity of water containing ornamental fish or edible fish and shellfish.

The present invention solved the aforementioned problems by using high-function water containing micro-dispersed ultra-fine active carbon particles, in said water tanks used for the raising/keeping of ornamental fish or edible fish and shellfish.

In other words, the present invention increases the bioactivity of water containing ornamental fish or edible fish and shellfish by pre-dispersing active carbon powder in high-pressure water, combusting a gaseous mixture of hydrogen and oxygen in the high-pressure water, burning the active carbon using the heat generated from this combustion and thereby obtaining high-pressure water in which ultra-fine active carbon particles are dispersed, and then adding this dispersed ultra-fine active carbon solution to the water used for the raising/keeping of ornamental fish or edible fish and shellfish. At the same time, the use of said solution helps decompose excrement from ornamental fish or edible fish and shellfish, thus reducing the contamination of fish-tank water and allowing ornamental fish or edible fish and shellfish to be kept alive for prolonged periods of time. The present invention further exhibits the sufficient cleaning effect of fish-tank water that will last for a longer period.

The dispersed active carbon water achieved through the present invention is water in which are dispersed ultra-fine active carbon particles that were obtained by combusting oxygen and hydrogen in high-pressure water inside a pressure container and then using the high temperature generated by this oxygen and hydrogen combustion gas to burn active carbon in the high-pressure water. This water solution containing dispersed active carbon is used as water for assisting the purification of water for feeding ornamental fish or edible fish and shellfish. With normal solutions or mixed solutions in which active carbon powder or its fine particles are dispersed in a simple manner, active carbon usually separates and deposits after a short period. On the other hand, with the dispersed active carbon water obtained through the present invention, the active carbon that was burned by the heat generated from oxygen and hydrogen combustion and then micro-dispersed in water does not separate or deposit, thereby maintaining a high absorptive function and quickly improving water quality. The dispersed active carbon water obtained by the present invention thus provides the remarkable effects of increasing the bioactivity of water containing ornamental fish or edible fish and shellfish through the interaction of water molecules and ultra-fine active carbon particles, while purifying the water by decomposing the excrement from ornamental fish or edible fish and shellfish.

Although the mechanism is not yet clear as to why the water obtained through the present invention, in which ultra-fine active carbon particles are dispersed, provides such improved bioactivity and an excrement-decomposing function, the inventors are working diligently to find chemical explanations for these effects.

### Brief Description of the Drawings

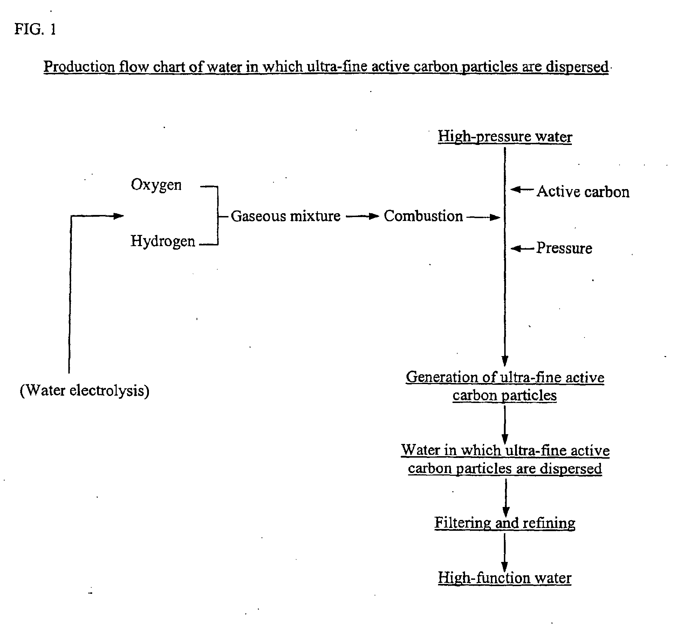

FIG. 1 shows a production flow chart pertaining to the dispersed active carbon water obtained through the present invention.

Namely, in the present invention active carbon is pre-dispersed in high-pressure water, and then a gaseous mixture of oxygen and hydrogen is combusted in this high-pressure water. The combustion heat thus generated is used to simultaneously burn the active carbon to create a solution in which ultra-fine active carbon particles are dispersed, which is then filtered as necessary to obtain the intended dispersed active carbon water.

### Best Mode for Carrying Out the Invention

The present invention involves pre-dispersing active carbon in high-pressure water within a pressure container, supplying oxygen and hydrogen into this high-pressure water to be combusted in the same, burning the active carbon using the high temperature generated by the combustion gas thus obtained, and then utilizing the resultant high-function water in which ultra-fine active carbon particles are dispersed in fish tanks used for keeping ornamental fish or edible fish and shellfish.

The dispersed active carbon water used in the present invention is a new creation not heretofore available for production. In the present invention, said water is produced through the new method of combusting the ultra-fine active carbon particles dispersed in a high-pressure liquid phase using the heat generated from the combustion of oxygen and hydrogen, as illustrated by the flow chart in FIG. 1, instead of combusting liquid or gaseous fuels in a gaseous phase.

In other words, after studying ways to efficiently and economically produce dispersed active carbon water and utilize it for purposes of improved bioactivity, the inventors came up with the idea of combusting hydrogen and oxygen and then burning pure active carbon powder in the combustion gas, and decided to use high-pressure water as the medium for said hydrogen and oxygen combustion in order to prevent the generation of byproducts other than water and active carbon.

As explained above, the dispersed active carbon water used in the present invention is produced by pre-dispersing active carbon in high-pressure water within a pressure container, supplying oxygen and hydrogen into this high-pressure water to be combusted in the same, and then burning the active carbon using the high temperature generated by the combustion gas thus obtained. However, to achieve a dispersed active carbon solution offering efficient bioactivity, it is necessary to control the volumes of combustible fuels, reactive pressure and the input volume of active carbon.

Under the aforementioned production method, a small volume of oxidized ultra-fine active carbon particles will be present in the resultant water in addition to pure ultra-fine active carbon particles. Therefore, an appropriate filtration system becomes necessary.

FIG. 1 shows a conceptual diagram of the production process for dispersed active carbon water as represented in the subject invention. First, active carbon powder is pre-dispersed in high-pressure water. Next, a gaseous mixture of hydrogen and oxygen generated via electrolysis is combusted in the high-pressure water. The heat generated through such combustion burns the active carbon dispersed in the high-pressure water, thereby producing fine active carbon particles. In the present invention, crushed active carbon with a grain size of 5 to 30 meshes may be used as the material. However, it is more appropriate to use general-purpose active carbon powder with a grain size of 100 meshes or less. The active carbon is burned through the combustion of said gaseous mixture of hydrogen and oxygen, and becomes ultra-fine particles with a size of micron order.

It is also possible to replace the material-gas generation system with high-pressure cylinders containing hydrogen and oxygen gases, respectively. However, in the present invention water electrolysis is used to supply pure oxygen and hydrogen gases, thus ensuring an efficient supply of material fuel gases.

The water produced as above contains a small volume of fine active carbon particles in the oxidized state, as generated through oxygen binding. Accordingly, these oxidized particles must be filtered and refined as necessary. So that no more of the generated ultra-fine active carbon particles are removed than is necessary, this filtration must not use ion-exchange, reverse osmotic membrane or the like. Instead, it is recommended that a filter system be used to produce water suitable for the intended purpose. Specifically, hollow-thread membrane provides an ideal filter material. It is also desirable, in terms of enhancing the characteristics of dispersed active carbon water and extending the filter life, that the high-pressure water discharged from the high-pressure water storage tank be filtered in sequence.

Under the present invention, the internal tank pressure should be roughly set to between 1.5 and 5 atmospheres, input volume of oxygen/hydrogen mixture gas between 1 and 8 liters per second, and input volume of active carbon into the combustion chamber between 1 and 10 kilograms per 1000 liters of water, when producing one ton of dispersed active carbon solution.

If the gas pressure is too high, the system's structure may be damaged. If the gas pressure is low, the gas may be blown upward from the combustion chamber. In this case, the heated/melted active carbon could be directly enveloped in air bubbles and diffused out of the water, thereby diminishing the production of ultra-fine active carbon particles.

In this method, hydrogen and oxygen must be combusted in water to prevent the generation of byproducts other than water and ultra-fine active carbon particles. At this time, hydrogen and oxygen must be combusted in water under high pressure in order to achieve proper combustion in a manner free of impurities. Also, the gaseous mixture must burn fully to completely become ultra-high-temperature steam at the location where the active carbon rod is inserted.

Shown below are the results of experiments intended to verify the effectiveness of dispersed active carbon solution as it pertains to the present invention.

A production system for fine active carbon particles was provided, consisting of a system to supply oxygen and hydrogen fuel gases, and a pressure tank with fuel-gas combustion chamber used for storing water into which active carbon has been pre-dispersed. The internal pressure of the production tank was set to 2 atmospheres, and 5 kilograms of active carbon powder was pre-dispersed in 1000 liters of water. Then, a gaseous mixture of hydrogen and oxygen was injected at a 2:1 mol ratio at a speed of 5 liters per second, and burned in the combustion area. This process was performed successively for one hour to produce the intended dispersed active carbon water.

### Example 1

The effectiveness of the aforementioned dispersed active carbon water in the freshwater breeding of ornamental fish was investigated using a 60-liter fish tank containing 10 black tetras. A tank containing only the dispersed active carbon water produced by the aforementioned method was compared with a tank containing water filtered using a conventional filter medium.

The consumption of potassium permanganate, which is an indicator of water contamination, was checked in the two tanks after 10 days and 23 days, respectively.

The results are shown in Table 1.

**Table 1**

| | After 10 days | After 23 days |
|---|---|---|
| Dispersed active carbon solution given by the present invention K₂MnO₄ consumption (mg/L) | 3.2 | 2.7 |
| Water filtered by a conventional filter medium K₂MnO₄ consumption (mg/L) | 5.8 | 7.9 |

As shown in Table 1, the consumption of potassium permanganate is lower in the dispersed active carbon solution given by the present invention, as compared with the water filtered by a conventional filter medium. This proves the purifying effect of the former.

### Example 2

Similarly, the effectiveness of the dispersed active carbon water given by the present invention, this time in salt water, was investigated using a 60-liter water tank containing 10 damselfish. The dispersed active carbon solution given by the present invention was added to salt water to 10 percent/weight. The consumption of potassium permanganate was checked in each tank after nine days and 22 days, respectively.

The results are shown in Table 2.

**Table 2**

| | After 9 days | After 22 days |
|---|---|---|
| Salt water mixed with dispersed active carbon solution given by the present invention K₂MnO₄ consumption (mg/L) | 7.4 | 17.0 |
| Salt water filtered by a conventional filter medium K₂MnO₄ consumption (mg/L) | 12.0 | 33.0 |
| Salt water (commercial healstone added) K₂MnO₄ consumption (mg/L) | 8.9 | 30.0 |

As shown in Table 2, the consumption of potassium permanganate is lower in the salt water mixed with the dispersed active carbon water given by the present invention, as compared with the water filtered by a conventional filter medium or containing healstone. This proves the purifying effect of the former.

### Industrial Field of Application

The present invention utilizes the bioactivity of dispersed active carbon water in which ultra-fine active carbon particles are dispersed by means of a new production method, to provide water for assisting the purification of water for feeding ornamental fish or edible fish and shellfish. Use of the dispersed active carbon water given by the present invention increases the bioactivity of water containing ornamental fish or edible fish and shellfish, and allows them to be kept alive for a prolonged period of time, while helping decompose the excrement from these fish to extend the tank cleaning cycle.

## Claims

1. Water for assisting the purification of water for feeding ornamental fishes or fishes and shellfishes in which ultra-fine active carbon particles are dispersed, said water for assisting the purification being obtained by combusting a gaseous mixture of oxygen and hydrogen in high-pressure water containing active carbon and then burning the active carbon using the resultant combustion gas.
